# EUROPEAN PATENT SPECIFICATION

(11) **EP 3 077 290 B1**
(45) Date of publication and mention of the grant of the patent: **06.03.2019**
(21) Application number: 14873347.0
(22) Date of filing: 06.10.2014
(51) Int. Cl.: B64D 37/00, B64D 37/04, B64D 37/14, F02M 37/20, F02M 25/08

(54) **BUBBLE COLLECTOR FOR SUCTION FUEL SYSTEM**
BLASENKOLLEKTOR FÜR EIN KRAFTSTOFFANSAUGSYSTEM
COLLECTEUR DE BULLES POUR SYSTÈME D'ASPIRATION DE COMBUSTIBLE

(30) Priority: 06.12.2013 US 201314098587
(43) Date of publication of application: 12.10.2016
(73) Proprietor: Sikorsky Aircraft Corporation, Stratford, CT 06615-9129 (US)
(72) Inventor: SMITH, David R., West Haven, Connecticut 06516 (US); SHIELDS, Daniel John, Derby, Connecticut 06418 (US)
(74) Representative: Schmitt-Nilson Schraud Waibel Wohlfrom Patentanwälte Partnerschaft mbB
(86) International application number: PCT/US2014/059258
(87) International publication number: WO 2015/099860

(56) References cited:
- GB-A- 2 158 157
- US-A- 3 888 223
- US-A- 4 704 070
- US-A- 4 856 483
- US-A- 4 856 483
- US-A- 5 490 387
- US-A1- 2006 027 100
- US-A1- 2009 266 078
- US-A1- 2009 266 078
- US-A1- 2012 111 417
- US-A1- 2012 111 417

## Description

### FEDERAL RESEARCH STATEMENT

This invention was made with government support under contract number N00019-06-C-0081 awarded by the United States Navy. The government has certain rights in the invention.

### BACKGROUND

The subject matter disclosed herein relates to aircraft. More specifically, the subject matter disclosed herein relates to suction fuel feed systems for aircraft.

Aircraft, for example, helicopters, include fuel feed systems having fuel lines and plumbing components which carry fuel from the fuel tanks to the engines. In modern helicopters, the engines are typically mounted higher up than the fuel tanks. Suction type engine fuel feed systems utilize a suction pump mounted on the engine which draws fuel up from the fuel tank. Suction type fuel feed systems are used in many helicopters because of the safety they provide. In the event of a fuel feed line leak, such as a rupture due to ballistic damage, air is drawn into the fuel line rather than fuel spraying out as would occur in a pressurized fuel system.

In a suction type fuel feed system, however, the suction acting on the fuel can cause air and fuel vapor dissolved in the fuel to come out of solution and form bubbles in the fuel as it travels up the fuel line to the engine fuel pump. The engine fuel pump has a maximum allowable vapor-to-liquid volume fraction (V/L) and a maximum allowable bubble size at the pump's fuel inlet which the pump can tolerate, beyond which, the fuel pump will lose its priming and stop pumping fuel, resulting in engine flame-out.

Engine fuel feed lines are generally designed to limit the fuel line pressure drop such that the calculated V/L ratio at the engine fuel pump inlet, based on the worst case combinations of altitude, fuel type, fuel pressure, fuel temperature, and aircraft g loading, is limited to the level the engine fuel pump can tolerate. The calculated V/L ratio represents a time-averaged value of the ratio of air-vapor volume to liquid fuel volume entering the engine fuel pump. However, constraints on the fuel line sizing and routing imposed by the helicopter configuration can cause occasional or periodic local concentrations of bubbles in the fuel line which are larger than the maximum bubble size that the engine pump can tolerate even when the overall time-averaged V/L ratio determined based on altitude, fuel type, fuel pressure, and fuel temperature is within the engine fuel pump limit.

A possible cause of a periodic accumulation of a large amount of air and fuel vapor at the engine fuel pump's fuel inlet is operation of the helicopter at conditions in which the fuel velocity in the fuel feed line is lower than the natural velocity at which a bubble would rise upward in the fuel line due to buoyancy (the "bubble rise velocity"). This situation is generally the result of sizing the fuel feed line diameter to meet the calculated pressure drop limit associated with the fuel pump's V/L limit at the maximum fuel flow, altitude, and maneuvering g level. The diameter and flow area of the fuel line needed to meet the allowable fuel line pressure drop for a given fuel line geometry can result in fuel velocities below the bubble rise velocity, particularly at low fuel flows. Over time, the volumes of liquid fuel and air-vapor would be consistent with the allowable V/L at the fuel pump inlet, but instantaneously, the V/L would be above the average value part of the time and below average the rest of the time. The time in which the V/L is above average corresponds to an above-average bubble size, which, if it is large enough, would cause pump loss of prime and engine flame-out. When this problem occurs, the fuel feed system operating envelope in terms of altitude, fuel temperature, fuel system pressure drop, and aircraft g capability is reduced below the envelope that would be available based on the engine fuel pump's stated V/L capability.

Another possible cause of a momentary large amount of air-vapor at the engine fuel pump's fuel inlet is a natural bubble trap in the fuel line which can occur at some aircraft attitudes, but not at others. If the aircraft operates for a period of time at attitudes in which a large enough volume of air-vapor to cause fuel pump loss of priming is trapped at a local location in the fuel line and then the aircraft changes to an attitude at which the air-vapor is no longer trapped at that location, the large volume of air-vapor would suddenly travel all at once to the engine fuel pump inlet, possibly resulting in engine flame-out. This could occur even when the time-averaged V/L ratio is well within the allowable value for the engine fuel pump. Engine fuel feed lines with relatively long, near-horizontal sections can cause this situation.

For example, in a helicopter in which the fuel tank is located a significant distance forward of the engine it feeds, the fuel line section from the fuel tank to the cabin ceiling may be nearly vertical, followed by a long, near-horizontal fuel line section going aft to the engine. A natural fuel trap would occur in the corner between the vertical and horizontal fuel line segments when the aircraft is in a nose-up attitude, but not in a nose-down attitude. An air-vapor volume trapped in the corner while operating nose-up would quickly travel to the engine fuel pump inlet if the aircraft changes to a nose-down attitude.

One current approach to the bubble problem is to use a boost pump to pressurize the fuel line at conditions within the aircraft operating envelope where bubbles may be formed which are large enough to cause suction pump failure. Using a boost pump to pressurize the fuel line, however, negates the safety benefit of the suction system when the boost pump is operating.

GB 2 158 157 A discloses a separator to deaerate aircraft engine fuel which: receives an air, vapor and fuel mixture at relatively low pressure from a fuel tank, separates the air and the vapor from the mixture, and provides a fuel supply at a relatively high pressure, and separated air and vapor is returned to the tank by a pump. GB 2 158 157 A's separator may comprise a settling chamber and a jet pump powered by a fuel by pass-line, its separator may be in the form of a swirl chamber which itself delivers fuel at the relatively high pressure and receives, for swirling purposes, fuel by-passed from the engine. Its swirl chamber may additionally have on its inlet side a jet pump powered by the by-passed fuel for draining fuel from the tank and for returning fuel vapor to the liquid state prior to entering the chamber.

U.S. 3,888,223 discloses an air fuel supply system for an internal combustion engine which has a carburetor connected to the intake manifold of an engine with a plurality of large diameter vapor ports formed below the carburetor throttle. Its vapor pump draws hydrocarbon vapors and air from the gas tank and from a fuel vapor evaporative control canister having a vent opening thereto and an inlet connected to a vent conduit from the top of the gas tank. Its vapor pump is operated during cold engine start to direct a precharge of vaporized fuel and air through the unrestricted vapor ports into the intake manifold for improving cold start operation and emissions.

U.S. 5,490,387 discloses a fuel pumping system for delivering fuel to an engine which includes a fuel transfer circuit for directing fuel from a fuel supply tank to the engine, a fuel boost pump, a main fuel pump and an accumulator device positioned along the transfer circuit between the boost pump and the engine for accumulating fuel and vapor so as to provide a reserve supply of fuel to the engine while minimizing the amount of undissolved vapor delivered to the engine. Its system includes a return passage communicating, at one end, with the accumulator and at an opposite end with the fuel transfer circuit upstream of the boost pump for directing fuel and vapor from the accumulator into the transfer circuit.

US 2009/266078 A1 discloses an anti-flow interruption system which is configured to provide a supply of fuel in the event of a fuel flow interruption from a fuel tank. The anti-flow interruption system includes a reservoir, a reservoir conduit, and a vapor bleed system. The reservoir conduit has an end disposed at the bottom of the reservoir and another connected to a fuel pump. The vapor bleed system includes a vapor bleed conduit and a vapor bleed restrictor. One end of the vapor bleed conduit is attached to the top of the reservoir and the other end is connected to the fuel pump. The vapor bleed restrictor is disposed in the vapor bleed conduit between the fuel pump and the reservoir. If fuel flow is interrupted and results in vapor being present in the reservoir, liquid fuel remaining in the reservoir continues to be supplied to the fuel pump while the vapor bleed system removes the vapor.

US 2012/111417 A1 discloses a fuel system for an aircraft which includes a fuel collector downstream of a boost pump and upstream of an engine fuel pump and a method of communicating fuel within an aircraft including offsetting a fuel collector from a fuel tank bottom surface and receiving fuel pumped by a boost pump into the fuel collector.

U.S. 4,856,483 discloses a marine fuel system for a fuel injected internal combustion engine with a fitting in the vapor supply line, which fitting has a first reduced diameter passage providing a vacuum bleed orifice passage partially venting vacuum from the induction manifold to atmosphere, to limit peak vacuum applied to the vapor separator from the induction manifold. Its fitting has a second reduced diameter passage providing a flow restrictor passage limiting the volume of flow of fuel vapor from the vapor separator to the induction manifold. Its fitting limits fuel vapor supplied from the vapor separator to the induction manifold at peak vacuum from the induction manifold during rapid engine deceleration to prevent an overly rich fuel air mixture in the induction manifold otherwise causing rough idling or stalling, also solving hot restart problems. U.S. 4,856,483 also provides a one-way check valve permitting only one-way flow of fuel from the vapor separator to the high pressure fuel injection pump.

The present invention can resolve shortcomings of the art with the solution set forth in the independent claim, with further refinements in the dependent claims.

### BRIEF SUMMARY

In one example, a fuel feed system for a rotary-winged aircraft includes a fuel feed line extending from a fuel source to an engine and an engine fuel suction pump located at the fuel feed line to urge a flow of fuel through the fuel feed line to the engine. A collector is located along the fuel feed line between the fuel source and the engine to collect air-vapor which forms as bubbles in the flow of fuel. An air-vapor line extends from the collector and merges into the fuel line section between the collector and the engine fuel suction pump to flow the air-vapor captured in the collector to the engine fuel suction pump. The air-vapor line is sized and configured to limit the flow of air-vapor to the engine fuel suction pump to a flow rate that the engine fuel suction pump can tolerate.

In another example, a rotary-winged aircraft includes an airframe and an engine located at the airframe, the engine operably connected to and driving a rotor assembly. A fuel feed system is operably connected to the engine and includes a fuel feed line extending from a fuel source to the engine. An engine fuel suction pump is located at the fuel feed line to urge a flow of fuel through the fuel feed line to the engine. A collector is located along the fuel feed line between the fuel source and the engine to collect air-vapor which forms as bubbles in the flow of fuel, and an air- vapor line extends from the collector to flow the air-vapor captured in the collector overboard or back to the fuel source such that the air-vapor does not enter the fuel line downstream of the collector and does not enter the engine fuel suction pump. An air pump in the air-vapor line urges the air-vapor captured in the collector to flow overboard or back to the fuel source via the air-vapor line.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features and advantages of the invention are apparent from the following detailed description taken in conjunction with the accompanying drawings in which:
FIG. 1 is a schematic view of an embodiment of a helicopter;
FIG. 2 is a schematic view of an embodiment according to the invention of a fuel feed system;
FIG. 3 is a schematic view of another embodiment not forming part of the claimed invention of a fuel feed system; and
FIG. 4 is a schematic view of yet another embodiment not forming part of the claimed invention of a fuel feed system.

The detailed description explains embodiments of the invention, together with advantages and features, by way of example with reference to the drawings.

### DETAILED DESCRIPTION

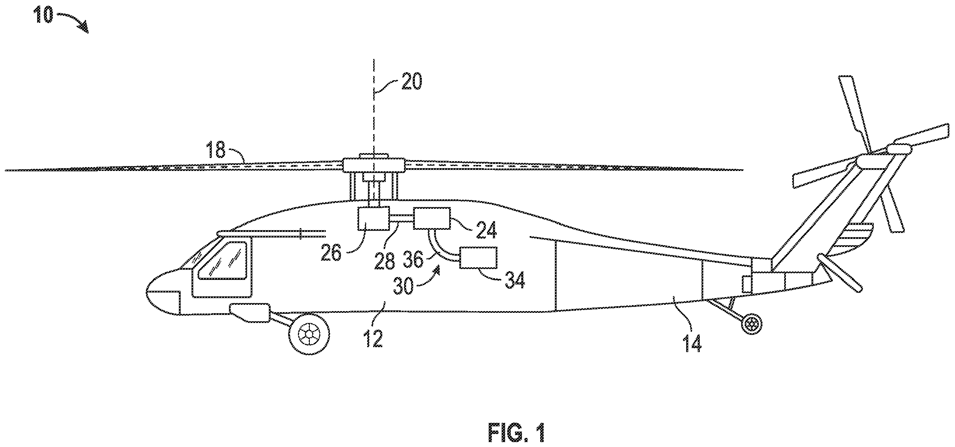

Shown in FIG. 1 is a schematic view of a rotary wing aircraft, a helicopter 10. The helicopter 10 includes an airframe 12 with an extending tail 14. A main rotor assembly 18 is located at the airframe 12 and rotates about a main rotor axis 20. The main rotor assembly 18 is driven by a power source, for example, an engine 24, in some embodiments, a turboshaft engine, via a gearbox 26. The engine 24 is connected to the gearbox 26 via a drive shaft 28. A fuel feed system 30 provides fuel to the engine 24.

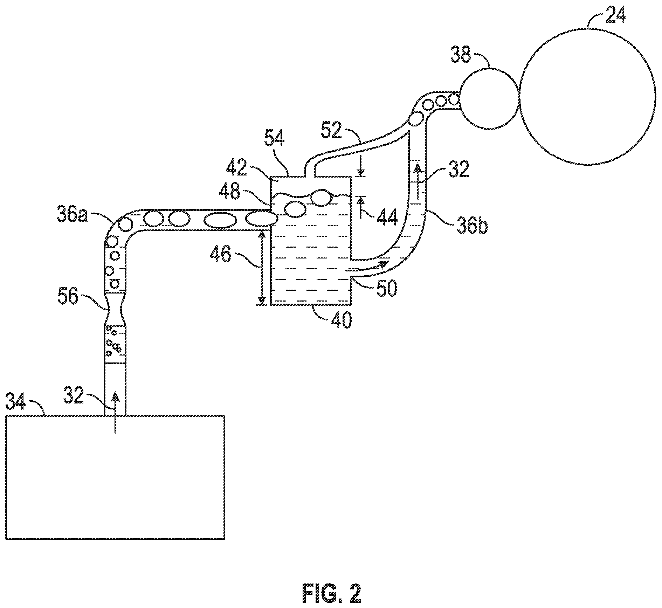

Referring now to FIG. 2, which is an embodiment of the claimed invention, the fuel feed system 30 will be described in more detail. A flow of fuel 32 is drawn from a fuel tank 34 through a fuel line 36 toward the engine 24 via an engine fuel pump 38. The engine fuel pump 38 is a suction pump. Use of a suction pump ensures that the fuel line 36 is not pressurized during operation of the engine fuel pump 38, such that a rupture or failure of the fuel line 36 will result in air being drawn into the fuel line 36 rather than fuel being sprayed from the fuel line 36.

A chamber, bubble collector 40, is located along the fuel line 36, between a lower fuel line 36a and an upper fuel line 36b. The lower fuel line 36a extends from the fuel tank 34 to the bubble collector 40, while the upper fuel line 36b extends from the bubble collector 40 to the engine fuel pump 38. The bubble collector 40 collects air-vapor 42 that separates from the flow of fuel 32 due to operation of the engine fuel pump 38. The air-vapor 42 collects in an upper portion 44 of the bubble collector 40, while the flow of fuel 32 proceeds through a lower portion 46 of the bubble collector 40 toward the engine 24 via the upper fuel line 36b. The bubble collector 40 includes a collector inlet 48 from the lower fuel line 36a and a collector outlet 50 to the upper fuel line 36b, with the collector outlet 50 located below the collector inlet 48 to facilitate separation of the air-vapor 42 from the flow of fuel 32.
The bubble collector 40 can be sized to capture the largest single local accumulation of air-vapor 42 which can occur in the lower fuel line 36a. The air-vapor 42 collected from one large accumulation can then be removed from the bubble collector 40 to make room for the next one.

In some embodiments, as shown in FIG. 2, which is a part of the claimed invention, the air-vapor 42 is reintroduced into the upper fuel line 36b. An air-vapor line 52 extends from the upper portion 44 of the bubble collector 40 and merges with the upper fuel line 36b. The air-vapor line 52 extends from a top surface 54 of the bubble collector 40. Air-vapor 42 captured in the upper portion 44 of the bubble collector 40 is drawn by the engine fuel pump 38 in parallel with the flow of fuel 32 in the upper fuel line 36b. The air-vapor line 52 can be sized and configured to limit the rate of re-introduction of captured air-vapor back into the fuel entering the engine fuel pump 38 to a value that the engine fuel pump 38 can tolerate. This approach effectively reduces the amplitude of the instantaneous V/L ratio of the fuel 32 entering the engine fuel pump 38 from the time-averaged value to a level that the engine fuel pump 38 can tolerate. Provided that the pressure drop vs. fuel flow of the entire fuel feed system from the fuel tank 34 and the engine fuel pump 38 is consistent with the time-averaged V/L limit of the engine fuel pump 38, the bubble collector 40 would likely not fill with air-vapor 42 to the point where significant amounts of air-vapor bubbles 42 exit the bubble collector 40 directly via the upper fuel line 36b. For operating conditions in which large accumulations of air-vapor 42 do not occur anywhere in the fuel line 36a or 36b, the vapor line 52 could simply function as a parallel path for the flow of fuel 32 when air-vapor 42 is not present. To ensure that air-vapor in the bubble collector 40 is drawn out of the bubble collector 40 toward the engine fuel pump 38, the upper portion 44 of the bubble collector 40 is positioned below the engine fuel pump 38 to provide a natural upward flowpath for the air-vapor. The upper portion of the bubble collector 44 is also positioned below the point where the air-vapor line 52 merges with the upper fuel line 36b, resulting in a pressure differential due to the head (difference in height) between the merge of the air-vapor line 52 into the upper fuel line 36b and the fuel level in the bubble collector 40 which draws the air-vapor out of the upper bubble collector 44.

Further, in some inventive embodiments, the lower fuel line 36a includes a smooth venturi 56, or a smooth narrowing 56 in the lower fuel line 36a, to locally reduce the static pressure in the lower fuel line 36a, thereby encouraging additional air-vapor 42 formation without significantly increasing the overall total pressure drop versus fuel flow of the fuel feed system between the fuel tank 34 and the engine fuel pump 38. The venturi / reduced
flow area 56 is included in the lower fuel line 36a to extract additional air-vapor 42 from the flow of fuel 32 upstream of the bubble collector 40, thereby increasing an amount of air-vapor 42 removed from the flow of fuel 32 at the bubble collector 40. The venturi /reduced flow area 56 is positioned close enough to the bubble collector 40 such that the additional air-vapor 42 formed by the venturi / reduced flow area 56 does not return to solution in the flow of fuel 32 prior to entering the bubble collector 40. The purpose of extracting additional air from the fuel upstream of the bubble collector 40 is to provide additional flexibility in the location of the bubble collector 40 between the fuel tank 34 and the engine pump 38 in a bubble collector 40 configuration in which the air-vapor line 52 merges with the upper fuel line 36b. Removing additional air-vapor from the fuel line 36a allows the bubble collector 40 to be located closer to the fuel tank 34 and at a lower height than would be needed without the venturi / area reduction 56.

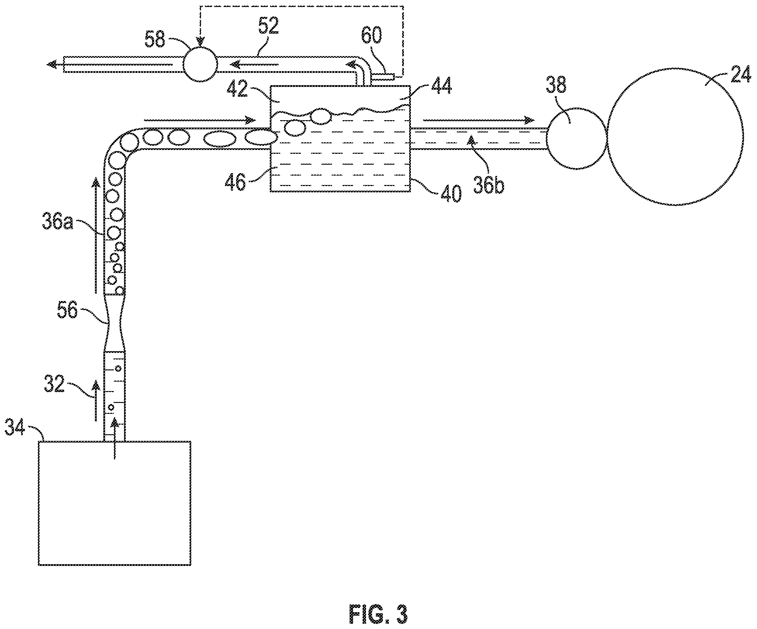

In another embodiment not forming part of the claimed invention, as shown in FIG. 3, the air-vapor 42 captured in the collector 40 is not reintroduced into the upper fuel line 36b. An air pump 58, in some embodiments a positive displacement pump, is used to pump the air-vapor 42 from the bubble collector 40 through the vapor line 52, which, in this embodiment, returns the air-vapor 42 to the fuel tank 34 (not shown). Alternatively, the air pump 58 may pump the air-vapor 42 overboard via the vapor line 52. Under some operating conditions, when there is not a significant amount of air-vapor 42 in the bubble collector 40, it is desired not to operate the air pump 58. Thus, a fuel sensor 60 is placed at an entrance to the vapor line 52. When the fuel sensor 60 is covered by fuel, as when there is not a significant amount of air-vapor 42 in the bubble collector 40, the air pump 58 is turned off. When the fuel sensor 60 is not covered by fuel, indicating presence of air-vapor 42, the air pump 58 is turned on and the air-vapor 42 is pumped from the bubble collector 40. This feature prevents pumping liquid fuel overboard under most circumstances. The air pump 58 should be tolerant of exposure to fuel and be capable of pumping liquid fuel in the event some liquid fuel momentarily reaches the pump due to maneuvering, fuel sloshing, etc. Use of a venturi / area reduction 56 in the lower fuel line 36a with a bubble collector 40 in which the air-vapor 42 is pumped back to the fuel tank 34 or overboard would remove more air-vapor 42 from the fuel than would be the case without the venturi / area reduction; less air-vapor 42 would reach the engine fuel pump 38.

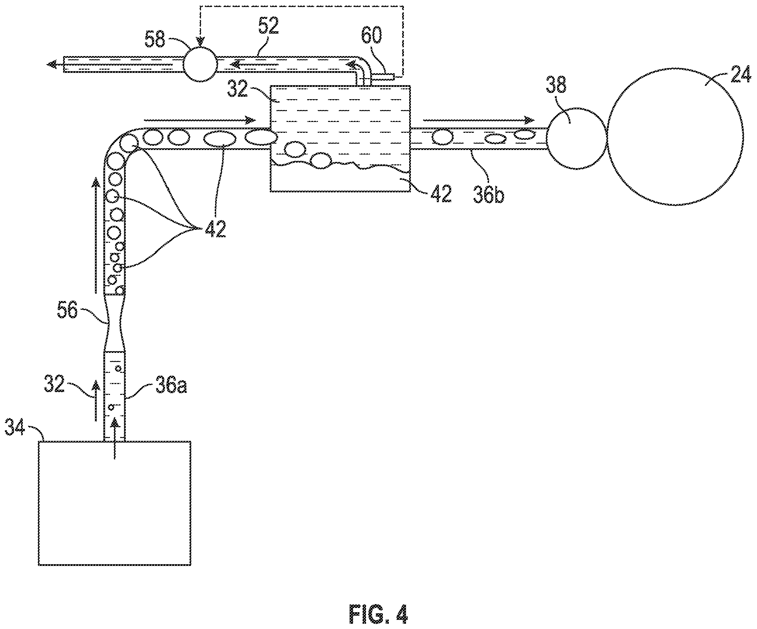

Referring now to FIG. 4, showing another embodiment not part of the claimed invention, extending the bubble collector 40 volume below the level of the fuel line 36a entry into and 36b exit out of the bubble collector 40 provides a negative g capability. The bubble collector 40 volume below the fuel line 36b level at the collector 40 outlet provides a space for any air-vapor 42 accumulated in the upper portion 44
of the bubble collector 40 prior to the negative g maneuver to go to during the negative g maneuver without significant amounts of the air-vapor 42 getting into the upper fuel line 36b. A small portion of the air-vapor 42 in the bubble collector 40 would be expected to enter the upper fuel line 36b while the collected air-vapor 42 is transitioning from the upper portion 44 of the bubble collector 40 to the lower portion 46 during the negative g maneuver and back to the upper portion 44 again after the negative g maneuver is over.

While the invention has been described in detail in connection with only a limited number of embodiments, it should be readily understood that the invention is not limited to such disclosed embodiments. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A fuel feed system (30) for a rotary-winged aircraft comprising:
a fuel feed line (36) extending from a fuel source (34) to an engine (24);
an engine fuel suction pump (38) disposed at the fuel feed line (36) to urge a flow of fuel (32) through the fuel feed line (36) to the engine (24);
a collector (40) connected to the fuel feed line (36) between the fuel source (34) and the engine (24) to collect air-vapor (42) in the flow of fuel (32); and
an air-vapor line (52) extending from the collector (40) to flow the air-vapor (42) from the collector (40) to the engine fuel suction pump (38),
wherein the air-vapor line (52) extending from the upper portion (44) of the collector (40), provides air-vapor (42) to the fuel feed line (36) between the collector (40) and the engine fuel suction pump (38), and
**characterized in that** a vapor line exit from the collector (40) is positioned vertically below the engine fuel suction pump (38) and vertically below a merge of the air-vapor line (52) into an upper portion (36b) of the fuel feed line (36) so as to provide a natural upward flowpath for the air-vapor (42).

2. The fuel feed system (30) of claim 1 wherein a fuel line exit (50) from the collector (40) is vertically below the engine fuel suction pump (38) and vertically below the merge of the air-vapor line (52) into an upper portion (36b) of the fuel feed line (36).

3. The fuel feed system (30) of claim 1, further comprising a smooth local narrowing (56) of the fuel feed line (36) at a location between the fuel source (34) and the collector (40) configured to induce additional air-vapor (42) formation in the fuel feed line (36).

4. The fuel feed system (30) of claim 1, including an air pump (58) in the air-vapor line (52) to urge air-vapor (42) from the collector (40) into the air-vapor line (52).

5. The fuel feed system (30) of claim 4, wherein the air-vapor (42) is routed to the fuel source (34) via the air-vapor line (52).

6. The fuel feed system (30) of claim 4, wherein the air-vapor (42) is removed from the fuel feed system (30) via the air-vapor line (52).

7. The fuel feed system (30) of claim 4, further comprising a fuel sensor (60) in or at an entrance to the air-vapor line (52) configured to control operation of the air pump (58).

8. A rotary-winged aircraft comprising:
an airframe (12);
an engine (24) disposed at the airframe (12), the engine (24) operably connected to and driving a rotor assembly (18); and
a fuel feed system (30) according to one of claims 1 to 7 operably connected to the engine (24).

9. The aircraft of claim 8 when dependent on one of claims 4 to 7, wherein the air-vapor (42) is routed overboard via the air-vapor line (52).

## Patentansprüche

1. Kraftstoffversorgungssystem (30) für ein Drehflügelflugzeug, umfassend:
eine Kraftstoffversorgungsleitung (36), die sich von einer Kraftstoffquelle (34) zu einem Motor (24) erstreckt;
eine Kraftstoffansaugpumpe des Motors (38), die an der Kraftstoffversorgungsleitung (36) angeordnet ist, um einen Kraftstoffstrom (32) durch die Kraftstoffversorgungsleitung (36) zu dem Motor (24) zu drängen;
einen Kollektor (40), der mit der Kraftstoffversorgungsleitung (36) zwischen der Kraftstoffquelle (34) und dem Motor (24) verbunden ist, um Luftdampf (42) in dem Kraftstoffstrom (32) aufzunehmen; und
eine Luftdampfleitung (52), die sich von dem Kollektor (40) erstreckt, um den Luftdampf (42) von dem Kollektor (40) zu der Kraftstoffansaugpumpe des Motors (38) zu strömen,
wobei die Luftdampfleitung (52), die sich von dem oberen Abschnitt (44) des Kollektors (40) erstreckt, Luftdampf (42) an die Kraftstoffversorgungsleitung (36) zwischen dem Kollektor (40) und der Kraftstoffansaugpumpe des Motors (38) bereitstellt,
und
**dadurch gekennzeichnet, dass** ein Dampfleitungsausgang aus dem Kollektor (40) vertikal unter der Kraftstoffansaugpumpe des Motors (38) und vertikal unter einer Zusammenführung der Luftdampfleitung (52) in einen oberen Abschnitt (36b) der Kraftstoffversorgungsleitung (36) positioniert ist, um einen natürlichen Strömungsweg nach oben für den Luftdampf (42) bereitzustellen.

2. Kraftstoffversorgungssystem (30) nach Anspruch 1, wobei ein Kraftstoffleitungsausgang (50) aus dem Kollektor (40) vertikal unter der Kraftstoffansaugpumpe des Motors (38) und vertikal unter der Zusammenführung der Luftdampfleitung (52) in einen oberen Abschnitt (36b) der Kraftstoffversorgungsleitung (36) liegt.

3. Kraftstoffversorgungssystem (30) nach Anspruch 1, ferner umfassend eine glatte lokale Verengung (56) der Kraftstoffversorgungsleitung (36) an einer Stelle zwischen der Kraftstoffquelle (34) und dem Kollektor (40), die dazu ausgelegt ist, zusätzliche Bildung von Luftdampf (42) in der Kraftstoffversorgungsleitung (36) herbeizuführen.

4. Kraftstoffversorgungssystem (30) nach Anspruch 1, beinhaltend eine Luftpumpe (58) in der Luftdampfleitung (52), um Luftdampf (42) aus dem Kollektor (40) in die Luftdampfleitung (52) zu drängen.

5. Kraftstoffversorgungssystem (30) nach Anspruch 4, wobei der Luftdampf (42) zu der Kraftstoffquelle (34) über die Luftdampfleitung (52) geleitet wird.

6. Kraftstoffversorgungssystem (30) nach Anspruch 4, wobei der Luftdampf (42) aus dem Kraftstoffversorgungssystem (30) über die Luftdampfleitung (52) entfernt wird.

7. Kraftstoffversorgungssystem (30) nach Anspruch 4, ferner umfassend einen Kraftstoffsensor (60) in oder an einem Eingang zu der Luftdampfleitung (52), der dazu ausgelegt ist, den Betrieb der Luftpumpe (58) zu steuern.

8. Drehflügelflugzeug umfassend:
ein Flugwerk (12);
einen Motor (24), der an dem Flugwerk (12) angeordnet ist, wobei der Motor (24) mit einer Rotorbaugruppe (18) wirkverbunden ist und diese antreibt; und
ein Kraftstoffversorgungssystem (30) gemäß einem der Ansprüche 1 bis 7, das mit dem Motor (24) wirkverbunden ist.

9. Flugzeug nach Anspruch 8, wenn von einem der Ansprüche 4 bis 7 abhängig, wobei der Luftdampf (42) über die Luftdampfleitung (52) über Bord geleitet wird.

## Revendications

1. Système d'alimentation en combustible (30) pour un aéronef à voilure tournante comprenant :
une conduite d'alimentation en combustible (36) s'étendant d'une source de combustible (34) à un moteur (24) ;
une pompe d'aspiration de combustible de moteur (38) disposée au niveau de la conduite d'alimentation en combustible (36) pour pousser un flux de combustible (32) à travers la conduite d'alimentation en combustible (36) jusqu'au moteur (24) ;
un collecteur (40) relié à la conduite d'alimentation en combustible (36) entre la source de combustible (34) et le moteur (24) pour recueillir l'air-vapeur (42) dans le flux de combustible (32) ; et
une conduite d'air-vapeur (52) s'étendant depuis le collecteur (40) pour l'écoulement de l'air-vapeur (42) du collecteur (40) à la pompe d'aspiration de combustible de moteur (38),
dans lequel la conduite d'air-vapeur (52) s'étendant depuis la partie supérieure (44) du collecteur (40) fournit de l'air-vapeur (42) à la conduite d'alimentation en combustible (36) entre le collecteur (40) et la pompe d'aspiration de combustible de moteur (38), et
**caractérisé en ce qu'**une sortie de conduite de vapeur depuis le collecteur (40) est positionnée verticalement en dessous de la pompe d'aspiration de combustible de moteur (38) et verticalement en dessous d'une fusion de la conduite d'air-vapeur (52) dans une partie supérieure (36b) de la conduite d'alimentation en combustible (36) de manière à fournir un trajet ascendant naturel pour l'air-vapeur (42).

2. Système d'alimentation en combustible (30) selon la revendication 1, dans lequel une sortie de ligne de carburant (50) depuis le collecteur (40) est verticalement en dessous de la pompe d'aspiration de combustible de moteur (38) et verticalement en dessous de la fusion de la conduite d'air-vapeur (52) dans une partie supérieure (36b) de la conduite d'alimentation en combustible (36).

3. Système d'alimentation en combustible (30) selon la revendication 1, comprenant en outre un rétrécissement local régulier (56) de la conduite d'alimentation en combustible (36) dans un emplacement entre la source de combustible (34) et le collecteur (40) conçu pour provoquer la formation d'air-vapeur (42) supplémentaire dans la conduite d'alimentation en combustible (36).

4. Système d'alimentation en combustible (30) selon la revendication 1, comprenant une pompe à air (58) dans la conduite d'air-vapeur (52) pour pousser l'air-vapeur (42) du collecteur (40) dans la conduite d'air-vapeur (52).

5. Système d'alimentation en combustible (30) selon la revendication 4, dans lequel l'air-vapeur (42) est acheminé jusqu'à la source de combustible (34) via la conduite d'air-vapeur (52).

6. Système d'alimentation en combustible (30) selon la revendication 4, dans lequel l'air-vapeur (42) est éliminé du système d'alimentation en combustible (30) via la conduite d'air-vapeur (52).

7. Système d'alimentation en combustible (30) selon la revendication 4, comprenant en outre un capteur de combustible (60) dans ou au niveau d'une entrée de la conduite d'air-vapeur (52) conçu pour commander le fonctionnement de la pompe à air (58).

8. Aéronef à voilure tournante comprenant :
une cellule (12) ;
un moteur (24) disposé au niveau de la cellule (12), le moteur (24) étant relié de manière opérationnelle à, et entraînant un ensemble de rotor (18) ; et
un système d'alimentation en combustible (30) selon l'une des revendications 1 à 7 relié de manière opérationnelle au moteur (24).

9. Aéronef selon la revendication 8 lorsqu'elle dépend de l'une des revendications 4 à 7, dans lequel l'air-vapeur (42) est acheminé par-dessus bord via la conduite d'air-vapeur (52) .
